# EUROPEAN PATENT APPLICATION

(11) **EP 4 513 855 A1**
(43) Date of publication of application: **26.02.2025**
(21) Application number: 23865856.1
(22) Date of filing: 14.09.2023
(51) Int. Cl.: H04L 67/00, H04L 67/289, G06F 8/71, G06F 8/65, H04L 67/10

(54) **SERVER SUPPORTING FIRMWARE UPDATE AND OPERATING METHOD THEREOF**

(30) Priority: 16.09.2022 KR 20220117230; 04.10.2022 KR 20220126351
(71) Applicant: Samsung Electronics Co., Ltd., Suwon-si, Gyeonggi-do 16677 (KR)
(72) Inventor: SHIN, Kyoungheun, Suwon-si Gyeonggi-do 16677 (KR); OH, Incheol, Suwon-si Gyeonggi-do 16677 (KR)
(74) Representative: Gulde & Partner
(86) International application number: PCT/KR2023/013779
(87) International publication number: WO 2024/058560

(57) **Abstract**

A server according to an example comprises a communication circuit, a processor, and a memory. The memory stores instructions to, when executed by the processor, allow the server to obtain regional policy files including firmware update policies to be applied so as to sequentially distribute a firmware update to electronic devices located in a plurality of regions in a list of target regions, transmit the regional policy files to edge servers respectively corresponding to the plurality of regions within a content delivery network (CDN) for the firmware update, and receive a firmware download request originating from an electronic device, wherein the firmware download request is processed on the basis of a first regional policy file corresponding to a region where the electronic device is located, and in response to receiving the firmware download request, on the basis of an IP address of the electronic device and a location of a first edge server, allow the first edge server, which has obtained the first regional policy file, to transmit a firmware package file to the electronic device.

## Description

### [Technical Field]

The disclosure relates to a server that supports firmware update of an electronic device through a content delivery network and a method for operating the same.

### [Background Art]

Advances in information and communication technology and semiconductor technology have led to a rapid increase in the spread and use of various electronic devices, such as personal devices, internet of things (IoT) appliances, or devices for machine communication. Electronic devices are operated through firmware (FW). Firmware is a core software program whose contents cannot be easily changed by the user and may be, for example, a set of microprograms recorded in read only memory (ROM) and used to control hardware. To stabilize the performance of the electronic device, fix bugs, enhance functionality, or update the operating system (OS), the manufacturer may continue to develop new versions of firmware even after the release of products that include the firmware.

If a new version of the firmware is developed, the electronic device may perform a firmware update for replacing the pre-installed firmware with the new version of firmware. The electronic device may perform a firmware update through various schemes using a wired network or a wireless network. An electronic device that supports wireless communication with a server (e.g., the manufacturer's server) may support a firmware update through wireless communication. Firmware update using wireless communication may be referred to as a firmware over the air (FOTA) service. According to the FOTA service, the server may distribute the files corresponding to a new version of firmware to electronic devices through a wireless network, and the electronic devices may perform a firmware update based on the received files.

### [Disclosure of Invention]

### [Solution to Problems]

Embodiments of the disclosure may provide a firmware update of an electronic device through wireless communication.

Embodiments of the disclosure may provide a server for distributing a firmware update policy for updating firmware of electronic devices and a method for operating the same.

A server according to an example embodiment may include a communication circuit, a processor operatively connected to the communication circuit; and memory storing instructions. The instructions may, when executed by the processor, cause the server to identify a target region list including a plurality of regions in which a firmware update policy is to be applied for sequentially distributing firmware update on a plurality of designated dates based on a distribution direction from a designated start location to a designated end location. The instructions may, when executed by the processor, cause the server to obtain one or more regional policy files including the firmware update policy to be applied for sequentially distributing firmware update to electronic devices located the plurality of regions included in the target region list for the designated dates. The instructions may, when executed by the processor, cause the server to transmit the one or more regional policy files to one or more edge servers corresponding to the plurality of regions, in a content delivery network (CDN) for firmware update through the communication circuit. The instructions may, when executed by the processor, cause the server to receive, through the communication circuit, a firmware download request originated from an electronic device, wherein the firmware download request is to be processed based on a first regional policy file corresponding to a region in which the electronic device is located. The instructions may, when executed by the processor, cause the server to cause a first edge server which obtained the first regional policy file based on an internet protocol (IP) address of the electronic device and a location of the first edge server, to provide a firmware package file to the electronic device in response to receiving the firmware download request.

An edge server of a content delivery network (CDN) according to an example embodiment may include a communication circuit, a memory, and a processor operatively connected to the communication circuit and the memory. The processor may be configured to receive a policy request for firmware update from an electronic device through the communication circuit. The processor may be configured to determine whether a firmware update policy corresponding to a device model of the electronic device is stored in the memory in response to the policy request. The processor may be configured to, based on the firmware update policy being not stored in the memory, obtain region information of the electronic device based on an IP (internet protocol) address of the electronic device and a location of the edge server. The processor may be configured to download, from a server, a regional policy file including a firmware update policy corresponding to the region information. The processor may be configured to transmit the regional policy file to the electronic device through the communication circuit.

A method performed by a server according to an example embodiment may include identifying a target region list including a plurality of regions in which a firmware update policy is to be applied for sequentially distributing firmware update on a plurality of designated dates based on a distribution direction from a designated start location to a designated end location. The method may include obtaining one or more regional policy files including the firmware update policy to be applied for sequentially distributing firmware update to electronic devices located in the plurality of regions included in the target region list for the designated dates. The method may include transmitting the one or more regional policy files to one or more edge servers corresponding to the plurality of regions, in a content delivery network (CDN) for firmware update. The method may include receiving a firmware download request originated from en electronic device, wherein the firmware download request is to be processed based on a first regional policy file corresponding to a region in which the electronic device is located. The method may include causing a first edge server, which obtained the first regional policy file based on an internet protocol (IP) address of the electronic device and a location of the first edge server, to provide a firmware package file to the electronic device in response to receiving the firmware download request.

A method for operating an edge server of a content delivery network (CDN) according to an example embodiment may include receiving a policy request for updating firmware from an electronic device. The method may include determining whether a firmware update policy corresponding to a device model of the electronic device is stored in response to the policy request. The method may include, based on the firmware update policy being not stored, obtaining region information of the electronic device based on an IP address of the electronic device and a location of the edge server. The method may include downloading, from a server, a regional policy file including a firmware update policy corresponding to the region information from a server. The method may include transmitting the regional policy file to the electronic device.

In a non-transitory computer-readable storage medium storing one or more programs according to an example embodiment, the one or more programs may include instructions configured to, when executed by a processor of a server, enable the server to: identify a target region list including a plurality of regions in which a firmware update policy is to be applied for sequentially distributing firmware update on a plurality of designated dates based on a distribution direction from a designated start location to a designated end location, obtain one or more regional policy files including the firmware update policy to be applied for sequentially distributing firmware update to electronic devices located in the plurality of regions included in the target region list for the designated dates, transmit the one or more regional policy files to one or more edge servers corresponding to the plurality of regions, in a content delivery network (CDN) for firmware update, receive a firmware download request originated from en electronic device, wherein the firmware download request is to be processed based on a first regional policy file corresponding to a region in which the electronic device is located, and cause a first edge server which obtained the first regional policy file based on an internet protocol (IP) address of the electronic device and a location of the first edge server, to provide a firmware package file to the electronic device in response to receiving the firmware download request.

In a non-transitory computer-readable storage medium storing one or more programs according to an example embodiment, the one or more programs may include instructions configured to, when executed by a processor of an edge server, enable the edge server to receive a policy request for firmware update from an electronic device; determine whether a firmware update policy corresponding to a device model of the electronic device is stored in response to the policy request and, based on the firmware update policy being not stored, obtain region information of the electronic device based on an IP address of the electronic device and a location of the edge server, download, from a server, a regional policy file including a firmware update policy corresponding to the region information, and transmit the regional policy file to the electronic device.

### [Brief Description of Drawings]

The above and other aspects, features and advantages of certain embodiments of the present disclosure will be more apparent from the following detailed description, taken in conjunction with the accompanying drawings, in which:
FIG. 1 is a view illustrating an example electronic device in a network environment according to various embodiments;
FIG. 2 is a block diagram illustrating a configuration of an example content delivery network (CDN) according to an embodiment of the disclosure;
FIG. 3A is a view illustrating a configuration of an example edge server according to an embodiment of the disclosure;
FIG. 3B is a view illustrating a configuration of an example FOTA server according to an embodiment of the disclosure;
FIG. 4 is a view illustrating an example regional firmware update according to an embodiment of the disclosure;
FIG. 5 is a sequence diagram illustrating an example firmware update;
FIG. 6 is a sequence diagram illustrating an example regional firmware update according to an embodiment of the disclosure;
FIG. 7 is a view illustrating an example system structure supporting a regional firmware update according to an embodiment of the disclosure;
FIG. 8 is a view illustrating an example regional gradual distribution of a firmware update policy according to an embodiment of the disclosure;
FIG. 9 is a view illustrating an example system structure supporting a regional gradual distribution of a firmware update policy according to an embodiment of the disclosure;
FIG. 10 is a flowchart illustrating an example firmware update support procedure by an edge server according to an embodiment of the disclosure;
FIG. 11 is a sequence diagram illustrating an example regional gradual distribution of a firmware update policy according to an embodiment of the disclosure; and
FIG. 12 is a flowchart illustrating an example firmware update support procedure by a FOTA server according to an embodiment of the disclosure.

### [Mode for the Invention]

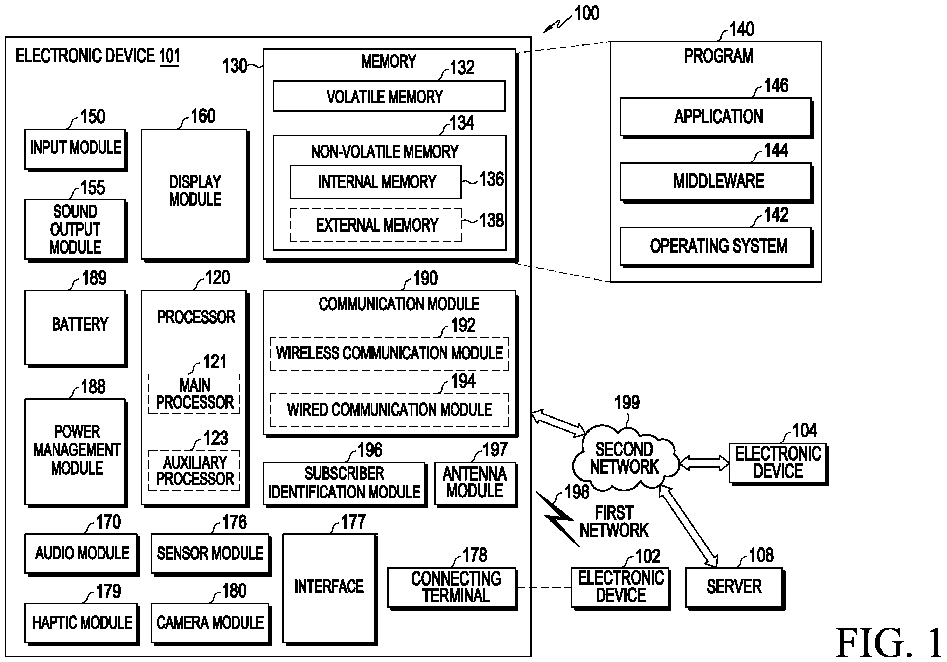

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of, the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other components (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part, of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of or including a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

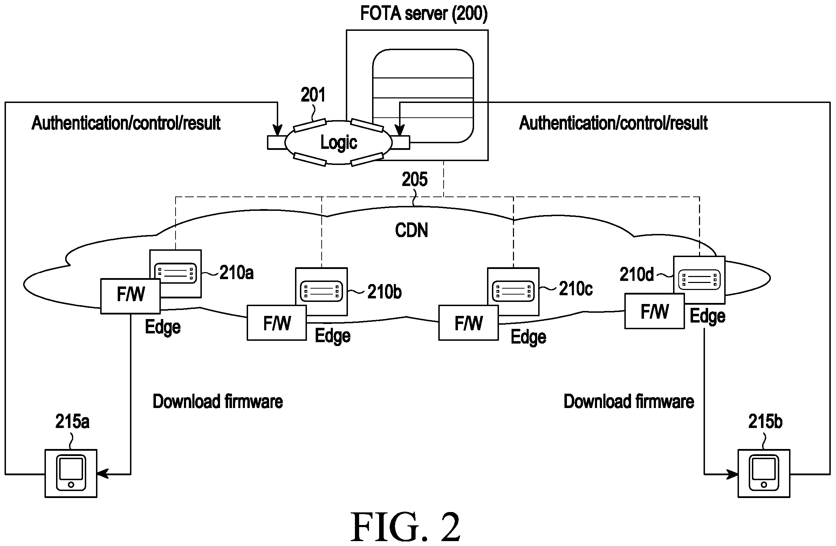

FIG. 2 is a block diagram illustrating a configuration of an example content delivery network (CDN) according to an embodiment of the disclosure.

Referring to FIG. 2, a manufacturer server 200 (e.g., a FOTA server) in charge of firmware update may manage device authentication, an update version, and a firmware update policy. The FOTA server 200 may include a module (e.g., a software logic 201) providing a firmware update service through the FOTA for bug fix, function enhancement, or OS update of at least one electronic device (e.g., the electronic devices 215a and 215b) (e.g., the electronic device 101 of FIG. 1) such as a smartphone, a tablet, or a smart watch distributed on the market. The FOTA server 200 may perform device authentication, update control, and update result collection for firmware update of the electronic devices 215a and 215b by using the software logic 201.

The content delivery network (CDN) 205 may be used to stably transmit a new version of firmware to the electronic devices 215a and 215b that may be located in a wide service region (e.g., one country or several countries). The content delivery network 205 may include a plurality of edge servers (e.g., the edge servers 210a, 210b, 210c, and 210d) that may be globally arranged in the service region, and store (e.g., cache) content (e.g., a firmware file and/or a policy file) to be provided to the electronic devices 215a and 215b in the edge servers (e.g., the edge servers 210a, 210b, 210c, and 210d). Each of the electronic devices 215a and 215b may download the firmware file including firmware of a desired version (e.g., a new version) quickly from an edge server (e.g., the edge server 210a or the edge server 210d) located nearby. Each of the electronic devices 215a and 215b may download the firmware file from the edge server (e.g., the edge server 210a or the edge server 210d) according to a firmware update policy indicating a time point and/or a period (e.g., a time range) when the firmware file of a designated version (e.g., a new version) is opened (e.g., published) or becomes available.

In an embodiment, when the FOTA server 200 distributes the new version of the firmware file to the edge servers 210a, 210b, 210c, and 210d based on the device model of the electronic devices 215a and 215b and/or the communication operator (e.g., the carrier), the firmware update may be performed for the entire country in which the corresponding device model is located, the entire country handled by the corresponding communication operator, or all of several countries. The FOTA server 200 may need location information about all electronic devices (e.g., including the electronic devices 215a and 215b) to perform firmware update on a specific device model or a specific communication operator (e.g., a specific carrier). The FOTA server 200 may determine to perform firmware update only in a desired region (e.g., a city, a state, or a country). It may be difficult for the FOTA server 200 to provide a regional firmware update without collecting location information for each device. The FOTA server 200 may have difficulty in collecting location information for each device for reasons such as privacy and/or carrier agreement.

In an embodiment, the FOTA server 200 may provide a regional firmware update using the content delivery network 205. In order to provide firmware update for each region, the edge servers 210a, 210b, 210c, and 210d of the content delivery network 205 may obtain and store a firmware update policy defining a method for opening the firmware file (e.g., the region and/or time when the firmware file is applied or available) from the FOTA server 200.

In an embodiment, the edge servers 210a, 210b, 210c, and 210d may perform regional throttling for sequentially distributing firmware files to the electronic devices 215a and 215b that may be distributed and located in a service region (e.g., one country or several countries). For example, at least one of the edge servers 210a, 210b, 210c, and 210d may include an edge computing server. In various embodiments of the disclosure, regional throttling may refer, for example, to gradually distributing firmware files while gradually (e.g., sequentially) expanding the region (e.g., a city, a state, or a country) to which firmware files are applied in the service region (e.g., one country or several countries).

In an embodiment, the edge servers 210a, 210b, 210c, and 210d may obtain a regional firmware update policy according to the location information about the electronic devices 215a and 215b from the FOTA server 200 in response to a policy request of the electronic devices 215a and 215b, may store the regional firmware update policy in a policy database (DB) (e.g., the policy DB 735 or the policy DB 935), and may provide the regional firmware update policy to the electronic devices 215a and 215b.

In an embodiment, the edge servers 210a, 210b, 210c, and 210d may provide a regional firmware update policy to perform a region-limited update in which features (e.g., transmission features of 5G communication support) reflected in the new version of the firmware file are applied only to a designated region. In an embodiment, the edge servers 210a, 210b, 210c, and 210d may provide a regional firmware update policy to provide a voice of customer (VOC) service for the features through service centers in the designated region.

In an embodiment, the FOTA server 200 may provide the edge servers 210a, 210b, 210c, and 210d with a firmware update policy for limitedly applying the new version of the firmware file to the designated region in order to increase efficiency of the customer satisfaction (CS) service by applying the new version of the firmware file to the designated region on a trial basis and collecting feedback before applying the new version of the firmware file to the entire region. In an embodiment, the FOTA server 200 may not know the location information about the electronic devices 215a and 215b to protect personal information, and may generate and distribute a regional firmware update policy so that the edge servers 210a, 210b, 210c, and 210d may download a firmware update policy in a desired region range.

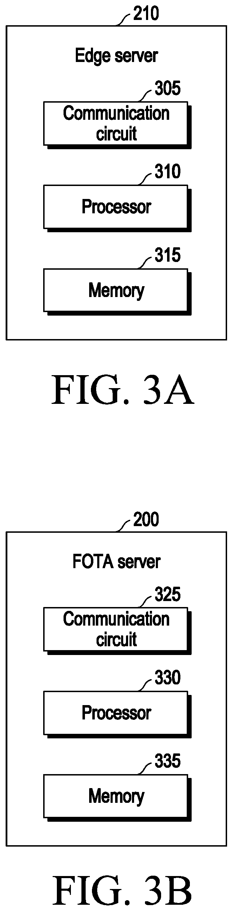

FIG. 3A is a view illustrating a configuration of an example edge server 210 according to an embodiment of the disclosure.

Referring to FIG. 3A, an edge server (e.g., the edge server 210 in the content delivery network 205) may download and store a policy file and a firmware file indicating a firmware update policy from a manufacturer server (e.g., the FOTA server 200) providing a firmware update service. The edge server 210 may include a communication circuit 305, a processor 310, and/or a memory 315.

The communication circuit 305 may perform communication between the edge server 210 and another network entity (e.g., at least one of the electronic devices 215a and 215b, the FOTA server 200, or an origin server 705). In an embodiment, the communication circuit 305 may support a wired and/or wireless communication scheme.

The edge server 210 may include a processor 310 that may be implemented with one or more single-core processors or one or more multi-core processors, and a memory 315 that stores instructions for operations of the processor 310.

According to an embodiment, the memory 315 may include a policy DB (e.g., a policy DB 735 or a policy DB 935) for storing the policy file and the firmware file downloaded from the FOTA server 210. According to an embodiment, the memory 315 may store instructions configured to enable the processor 310 to perform a regional firmware update service. According to an embodiment, the memory 315 may store data (e.g., the IP addresses of the electronic devices 215a and 215b and/or the location of the edge server 210) for providing operations related to the firmware update service according to various embodiments of the disclosure.

FIG. 3B is a view illustrating a configuration of an example FOTA server 200 according to an embodiment of the disclosure.

Referring to FIG. 3B, the FOTA server 200 may develop and generate a policy file and a firmware file indicating a firmware update policy for providing a firmware update service. The FOTA server 200 may include a communication circuit 325, a processor 330, and/or a memory 335.

The communication circuit 325 may perform communication between the FOTA server 200 and another network entity (e.g., at least one of the electronic devices 215a and 215b, the edge server 210, or the origin server 705). In an embodiment, the communication circuit 325 may support a wired and/or wireless communication scheme.

The FOTA server 200 may include a processor 330 that may be implemented with one or more single-core processors or one or more multi-core processors, and a memory 335 that stores instructions for operations of the processor 330.

According to an embodiment, the memory 335 may include a policy DB (e.g., a policy DB 720 or a policy DB 920) for storing one or more policy files and firmware files (e.g., firmware package file) generated by the FOTA server 210. According to an embodiment, the memory 335 may store instructions configured to enable the processor 330 to perform a regional firmware update service. According to an embodiment, the memory 335 may store data (e.g., at least one of a start location, an end location, a regional unit, or a distribution direction for a regional gradual distribution of a firmware update policy) for providing operations related to a firmware update service according to various embodiments of the disclosure.

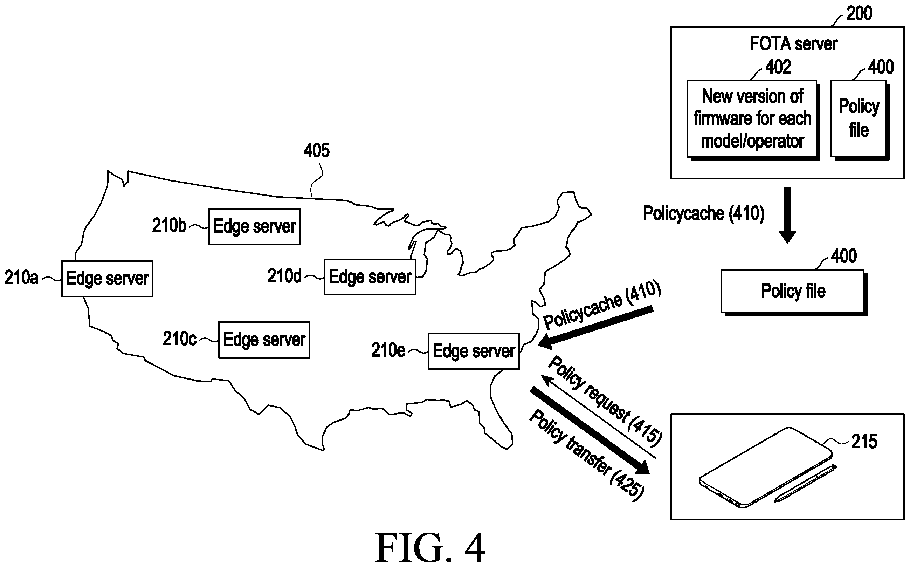

FIG. 4 is a view illustrating an example regional firmware update according to an embodiment of the disclosure.

Referring to FIG. 4, the content delivery network 205 may include a plurality of edge servers 210a, 210b, 210c, 210d, and 210e distributed and installed in a service region 405 (e.g., one country or one or more countries). The FOTA server 200 may develop a new version of firmware 402 for each device model and/or communication operator. The FOTA server 200 may store the new version of firmware 402 in the plurality of edge servers 210a, 210b, 210c, 210d, and 210e in the content delivery network 205 so that the electronic device 215 (e.g., the electronic device 215a or the electronic device 215b) may quickly download the new version of firmware 402.

The FOTA server 200 may generate a firmware update policy indicating a scheme in which the electronic device 215 (e.g., the electronic device 215a or the electronic device 215b) downloads the new version of the firmware 402, and may generate a policy file 400 including the firmware update policy. The FOTA server 200 may store (e.g., cache) the policy file 400 to the plurality of edge servers 210a, 210b, 210c, 210d, and 210e in the content delivery network 205, e.g., through a policy cache message 410.

The electronic device 215 (e.g., the electronic device 215a or the electronic device 215b) may transmit a policy request 415 to one edge server (e.g., the edge server 210e) identified as being located closest to the electronic device 215, among the plurality of edge servers 210a, 210b, 210c, 210d, and 210e. The edge server 210e may provide the policy file 400 cached from the FOTA server 200 to the electronic device 215 through a policy transfer message 425 in response to the policy request 415.

The electronic device 215 may download a new version of firmware (e.g., the firmware 402) from a nearby edge server (e.g., the edge server 210e) according to the time point and the period according to the firmware update policy included in the policy file 400.

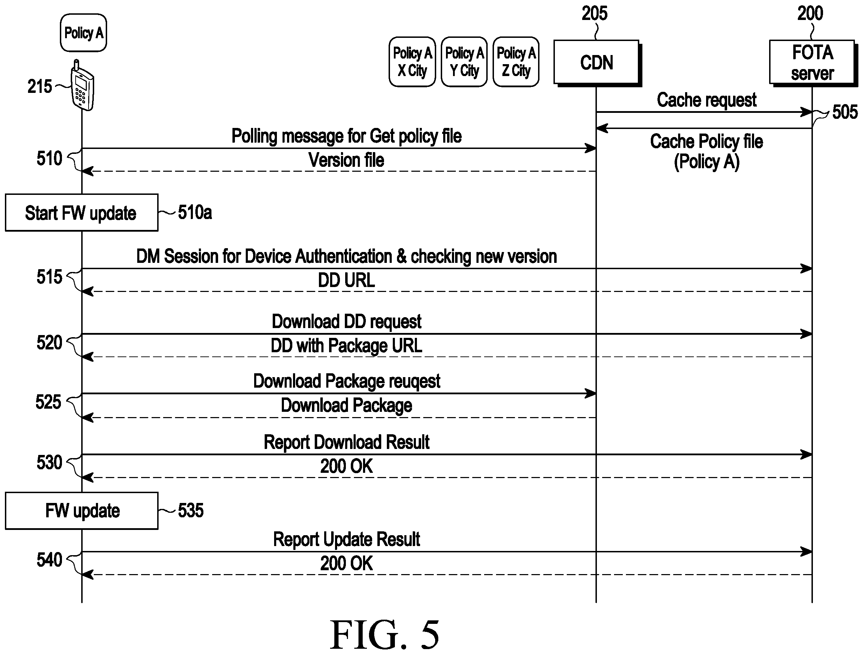

FIG. 5 is a sequence diagram illustrating an example firmware update.

Referring to FIG. 5, in operation 505, the FOTA server 200 may cache a policy file including a new version of firmware update policy (e.g., policy A) to at least one edge server in the content delivery network 205 in response to a cache request from the content delivery network 205 (e.g., at least one edge server in the content delivery network 205). In an embodiment, an edge server related to a X city, an edge server related to a Y city, and an edge server related to a Z city may all store the same policy file (e.g., a policy A).

In operation 510, the electronic device 215 (e.g., the electronic device 215a or the electronic device 215b) may transmit a polling message for requesting a new version of firmware update policy (e.g., a new version of firmware update policy) to the content delivery network 205 (e.g., an edge server located close to the electronic device 215 in the content delivery network 205), and may receive the policy file from the edge server.

In operation 510a, the electronic device 215 may determine to start the firmware update according to the firmware update policy (e.g., the policy A) included in the policy file. In an embodiment, the firmware update policy may include an open scenario for a designated version of firmware (e.g., a time point when the designated version of firmware is released and a corresponding region). The electronic device 215 may initiate firmware update at the time point when the firmware of a desired version (e.g., the most recent version) is opened according to the firmware update policy.

In operation 515, the electronic device 215 that has determined to update the firmware may transmit a device management (DM) session message for device authentication and new version checking to the FOTA server 200 and may receive a download description (DD) uniform resource locator (URL) from the FOTA server 200. In an embodiment, the DD URL may include the address of a server (e.g., the FOTA server 200) capable of receiving a DD (e.g., a package URL from which a firmware is downloaded) associated with downloading firmware.

In operation 520, the electronic device 215 may receive a DD including the package URL for downloading firmware from the FOTA server 200 using the DD URL. In operation 525, the electronic device 215 may download a firmware package file including a new version of firmware from the content delivery network 205 (e.g., one edge server in the content delivery network 205) indicated by the package URL, using the package URL. In operation 530, the electronic device 215 may transmit a download result report indicating that firmware download has been performed to the FOTA server 200.

In operation 535, the electronic device 215 may update firmware based on the firmware package file. In an embodiment, the firmware package file may include at least part of the new version of firmware (e.g., binary data changed compared to the existing version of firmware). In an embodiment, the electronic device 215 may update firmware by replacing at least part of existing firmware being executed with data included in the firmware file. In operation 540, the electronic device 215 may transmit an update result report indicating that firmware update has been performed to the FOTA server 200.

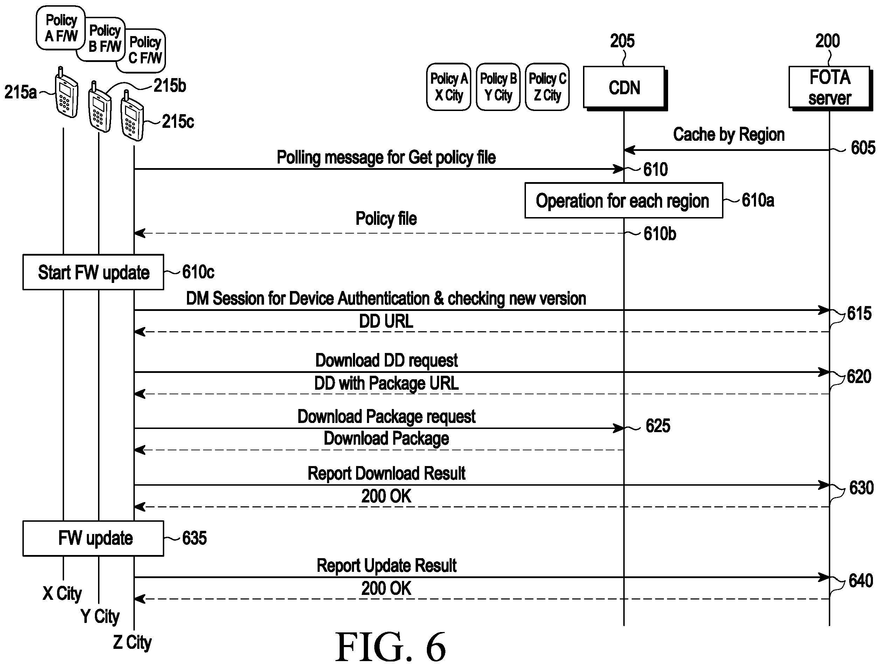

FIG. 6 is a sequence diagram illustrating an example regional firmware update according to an embodiment of the disclosure.

Referring to FIG. 6, in operation 605, the FOTA server 200 may cache policy files including a new version of firmware update policy (e.g., policy A) to edge servers in the content delivery network 205. In an embodiment, the edge server serving X city may receive a first firmware update policy (e.g., policy A) for X city from the FOTA server 200, the edge server serving Y city may receive a second firmware update policy (e.g., policy B) for Y city from the FOTA server 200, and the edge server serving Z city may receive a third firmware update policy (e.g., policy C) for Z city from the FOTA server 200.

In operation 610, the electronic device 215 (e.g., at least one of the electronic device 215a, the electronic device 215b, or the electronic device 215c) may transmit a polling message for requesting a new version of firmware update policy (e.g., a new version of firmware update policy) to the content delivery network 205 (e.g., an edge server located close to the electronic device 215 in the content delivery network 205). In operation 610a, the edge server (e.g., an edge server located close to the electronic device 215) may perform an edge operation for determining a regional firmware update policy for the electronic device 215. In an embodiment, the edge server may determine a regional firmware update policy (e.g., any one of policy A, policy B, or policy C) for the electronic device 215 according to the IP address of the electronic device 215 and the region where the edge server is installed (e.g., any one of X city, Y city, or Z city).

In operation 610b, the electronic device 215 may receive the policy file including the regional firmware update policy for the electronic device 215 from the edge server. In operation 610c, the electronic device 215 may determine to start the firmware update according to the firmware update policy included in the policy file. In an embodiment, the electronic device 215 may initiate firmware update at the time point when the firmware of a desired version (e.g., the most recent version) is opened according to the firmware update policy. In an embodiment, the electronic device 215 (e.g., the electronic device 215a) located in X city may determine not to update firmware, based on policy A for X city. In an embodiment, the electronic device 215 (e.g., the electronic device 215b) located in Y city may determine to update firmware at a first open time point according to policy B for Y city. In an embodiment, the electronic device 215 (e.g., the electronic device 215c) located in Z city may determine to update firmware at a second open time point (e.g., different from the first open time point) according to policy C for Z city.

In operation 615, the electronic device 215 (e.g., the electronic device 215b or the electronic device 215c) that has determined to update the firmware may transmit a DM session message for device authentication and new version identification to the FOTA server 200 and may receive a DD URL from the FOTA server 200. In an embodiment, the DD URL may include the address of a server (e.g., the FOTA server 200) capable of receiving a DD associated with downloading firmware.

In operation 620, the electronic device 215 may receive a DD including a package URL capable of downloading firmware from the FOTA server 200 using the DD URL. In operation 625, the electronic device 215 may download a firmware package file from the content delivery network 205 (e.g., an edge server located close to the electronic device 215 in the content delivery network 205) indicated by the package URL, using the package URL.

In operation 630, the electronic device 215 may transmit a download result report indicating that firmware download has been performed to the FOTA server 200. In operation 635, the electronic device 215 may update firmware based on the firmware file included in the firmware package file. In an embodiment, the electronic device 215 may update firmware by replacing at least part of existing firmware being executed with data included in the firmware file. In operation 640, the electronic device 215 may transmit an update result report indicating that firmware update has been performed to the FOTA server 200.

According to various embodiments of the disclosure, the manufacturer server (e.g., the FOTA server 200) may distribute the policy (e.g., a regional firmware update policy) for regional firmware update to edge servers (e.g., the edge server 210) located close to (or belonging to) the designated region, without collecting location information about the electronic device 215 to update with the new version of firmware for the electronic device (e.g., the electronic device 215). The edge servers (e.g., the edge server 210) may preferentially apply firmware update to a designated region (e.g., a country, state, and/or city) based on the regional firmware update policy.

The FOTA server 200 may open the new version of firmware for a specific device model and/or communication operator only to a designated region, rather than the entire service region (e.g., one country or several countries), through the regional firmware update policy. The FOTA server 200 may enhance the firmware by opening features included in the new version of firmware for the specific device model in some regions selected on a trial basis, rather than opening the features in the entire service region, and collecting feedback for the features in some regions. The FOTA server 200 may gradually (e.g., sequentially) open the enhanced version of firmware throughout the service region through feedback.

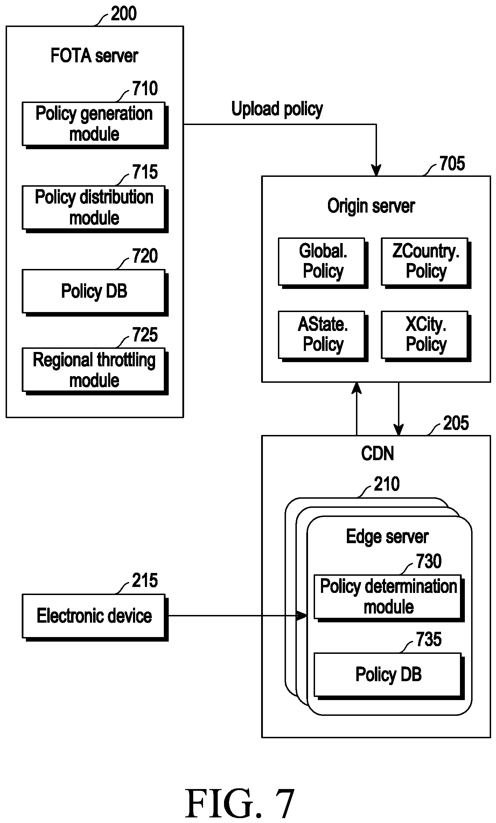

FIG. 7 is a view illustrating an example system structure supporting a regional firmware update according to an embodiment of the disclosure.

Referring to FIG. 7, the FOTA server 200 may include a policy generation module 710, a policy distribution module 715, a policy DB 720, and a regional throttling module 725. In one embodiment, at least one of the policy generation module 710, the policy distribution module 715, the policy DB 720, or the local throttling module 725 may be included in the software logic (e.g., the software logic 201) of the FOTA server 200. In one embodiment, the FOTA server 200 may further include a memory (e.g., the memory 335) to store one or more firmware files and/or one or more policy files (e.g., one or more regional policy files). In an embodiment, the origin server 705 may store policy files indicating a regional firmware update policy generated by the FOTA server 200 for each device model and/or communication operator, and may be included in, e.g., the FOTA server 200 or may be configured as a separate server.

The policy generation module 710 may generate a firmware update policy indicating an open scenario (e.g., an open time point for each region) of firmware for a specific device model and/or a specific communication operator, and may store one or more policy files including the firmware update policy in the policy DB 720. The policy distribution module 715 may read the one or more policy files from the policy DB 720 and upload the policy files to the origin server 705.

The origin server 705 may store regional policy files and a global policy file (e.g., "Global.policy") including the firmware update policy for the device model and/or the communication operator. The regional policy files may include at least one of city policy files (e.g., "XCity.policy"), state policy files (e.g., "AState.policy"), or country policy file(s) (e.g., "ZCountry.policy"). The global policy file may be generated by default, and regional policy files may be selectively generated according to the open scenario. In one embodiment, the global policy file may include a firmware update policy (e.g., a specified version and/or publication time) applicable to all electronic devices without regional restrictions. In one embodiment, one of the regional policy files may include a firmware update policy to be applied to electronic devices located in the designated region. For example, a city policy file may include a firmware update policy (e.g., a specified version and/or a release time) to be applied to a designated city (e.g., either a X city, a Y city, or a Z city).

Edge servers (e.g., the edge server 210) in the content delivery network 205 may include a policy determination module 730 and a policy DB 735. In an embodiment, the policy determination module 730 may be software logic included in the processor 310 of the edge server 210. In an embodiment, the policy DB 735 may be a storage area included in the memory 315 of the edge server 210.

In an embodiment, the policy determination module 730 may estimate the region where the electronic device 215 is located based on the IP address of the electronic device (e.g., the electronic device 215) transmitting the policy request and/or the location of the edge server 210, may obtain, from the origin server 705, a policy file indicating the latest version of the firmware update policy corresponding to the estimated region, and may transfer the policy file to the electronic device 215. The electronic device 215 may communicate with the FOTA server 200 and the edge server 210 at the open time point corresponding to the current region according to the policy file to download the new version of firmware.

In an embodiment, when the policy file of the new version applied to the corresponding region according to the estimated location of the electronic device 215 is not stored in the policy DB 735, the policy determination module 730 may obtain the policy file of the new version from the origin server 705, store the policy file in the policy DB 735, and transmit the policy file of the new version to the electronic device 215.

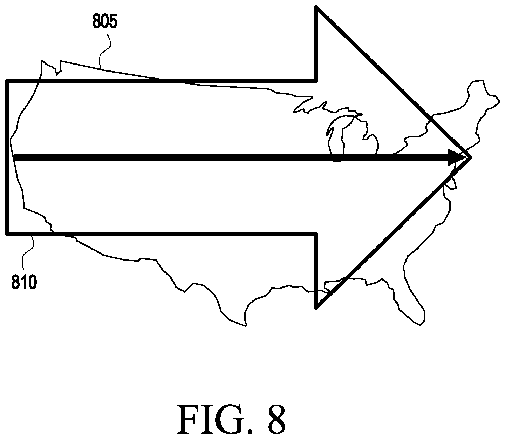

FIG. 8 is a view illustrating an example regional gradual distribution of a firmware update policy according to an embodiment of the disclosure.

Referring to FIG. 8, a service region 805 may include a plurality of cities and states, and a manufacturer or a communication operator may perform performance stabilization, bug fix(es), or function enhancement(s) based on feedback collected from electronic devices to which the new version of firmware is applied while gradually applying the new version of firmware within the service region.

For example, if the firmware distribution is done within a country, the manufacturer server (e.g., the FOTA server 200) may determine a FROM region from which the firmware distribution starts (e.g., California) and a TO region to which the firmware distribution finishes (e.g., New Jersey) geographically along latitude or longitude, and may generate a regional firmware update policy such that the new version of firmware is gradually opened according to a distribution direction 810 (e.g., a horizontal direction or a vertical direction) from the FROM region to the TO region.

In an embodiment, horizontal distribution on a per-state basis according to the designated distribution direction 810 is described as follows.
Days 1-2: CALIFORNIA, OREGON, WASHINGTON
Days 3-4: NEVADA, IDAHO, ARIZONA
Days 5-6: UTAH, MONTANA, WYOMING
Days 7-8: COLORADO, NEW MEXICO, TEXAS
Days 9-10: NEBRASKA, NORTH DAKOTA, SOUTH DAKOTA, KANSAS, OKLAHOMA
Days 11-12: IOWA...
Days 13-14: ILLINOIS...
Days 15-16: INDIANA...
Days 17-18: OHIO...
Days 19-20: PENNSYLVANIA,...
Days 21-22: NEW JERSEY

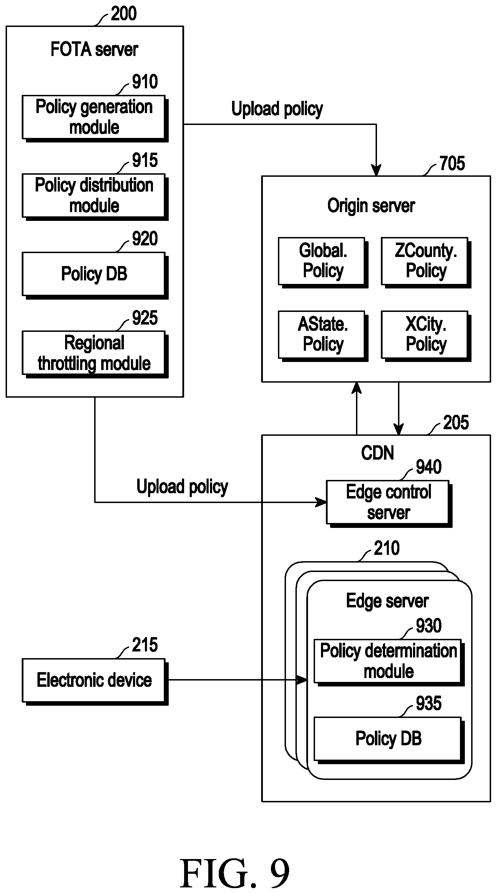

FIG. 9 is a view illustrating an example system structure supporting a regional gradual distribution of a firmware update policy according to an embodiment of the disclosure.

Referring to FIG. 9, the FOTA server 200 may include a policy generation module 910, a policy distribution module 915, a policy DB 920, and a regional throttling module 925. The origin server 705 may store policy files indicating a regional firmware update policy generated by the FOTA server 200 for each device model and/or communication operator, and may be included in, e.g., the FOTA server 200 or may be configured as a separate server.

The policy generation module 910 may generate a firmware update policy indicating an open scenario (e.g., an open time point for each region) of firmware for a specific device model and/or a specific communication operator, and may store one or more policy files including the firmware update policy in the policy DB 920. The policy distribution module 915 may read the at least one policy file from the policy DB 920 and upload the read policy file to the origin server 705.

The origin server 705 may store regional policy files and a global policy file (e.g., "Global.policy") including the firmware update policy for the device model and/or the communication operator. The regional policy files may include at least one of city policy files (e.g., "XCity.policy"), state policy files (e.g., "AState.policy"), or country policy file(s) (e.g., "ZCountry.policy"). The global policy file may be generated by default, and regional policy files may be selectively generated according to the open scenario.

Edge servers (e.g., the edge server 210) in the content delivery network 205 may include a policy determination module 930 and a policy DB 935. The policy determination module 930 may estimate the region where the electronic device 215 is located based on the IP address of the electronic device (e.g., the electronic device 215) transmitting the policy request and/or the location of the edge server 210, may obtain, from the origin server 705, a policy file indicating the latest version of the firmware update policy corresponding to the estimated region, and may transfer the policy file to the electronic device 215. The electronic device 215 may communicate with the FOTA server 200 and the edge server 210 at the open time point corresponding to the current region according to the policy file to download the new version of firmware.

The content delivery network 205 may include an edge control server 940 for edge control between the FOTA server 210 and edge servers (e.g., the edge server 210). The edge control server 940 may distribute a designated firmware update policy to the edge server (e.g., the edge server 210) located close to the electronic device 215, and may perform regional, gradual distribution of the firmware update policy.

When the policy file of a new version applied to the corresponding region according to the estimated location of the electronic device 215 is not stored in the policy DB 935, the policy determination module 930 may obtain the policy file of the new version from the origin server 705, store the policy file in the policy DB 935, and transmit the policy file of the new version to the electronic device 215.

In the FOTA server 200, the regional throttling module 925 may manage an edge-based regional policy opening method. In an embodiment, the range of the region may be divided into city, state, country, and global. The regional throttling module 925 may generate a target region list and a daily policy. The regional throttling module 925 may receive, from the policy generation module 910, information indicating at least one of the start/end location (e.g., a FROM region and a TO region), the unit region, or the distribution direction (e.g., latitude or longitude) for gradual distribution. The regional throttling module 925 may generate a target region list according to a request from the policy generation module 910.

In an embodiment, the regional throttling module 925 may identify the target region of the corresponding date according to the date (e.g., present date) when throttling is performed and the entire service region based on the target region list and generate a daily policy file indicating the firmware update policy for the identified target region. In an embodiment, the region throttling module 925 may identify the target region of the corresponding date according to the entire service region and the date (e.g., the current date) on which throttling is performed based on the target region list, and may create daily policy files that include firmware update policies for the identified target region. The generated policy file may be stored in the policy DB 920. The regional throttling module 925 may generate regional policy files for each day until the open schedule for gradual distribution is finished and store the generated regional policy files in the policy DB 920.

In an embodiment, the regional throttling module 925 may gradually spread the region for which firmware update is provided according to the regional unit (e.g., city, state, or country) using the latitude or longitude. In an embodiment, the regional throttling module 925 may determine to apply regional throttling according to a result (e.g., the maximum number of updates per day) of performing general firmware update that does not distinguish regions. In order to apply regional throttling, the regional throttling module 925 may receive, e.g., at least one message designating the start location (e.g., FROM region), the end location (e.g., TO region), the unit (e.g., city, state, or country), or the distribution direction (e.g., latitude/vertical or longitude/horizontal) from the policy generation module 910. The regional throttling module 925 may generate regional policy files to which regional throttling is applied, based on the at least one message, and may store the generated regional policy files in the policy DB 920.

The policy determination logic 930 of the edge server 210 may identify whether a policy file (e.g., a new version of the policy file) corresponding to the device model of the electronic device 215 and/or the communication operator is stored in the policy DB 935, and if not stored, may determine the city, state, country, and global corresponding to the electronic device 215 based on the IP address of the electronic device 215 and the location of the edge server 210. The policy determination logic 930 may check whether there is a policy file corresponding to the origin server 705 in the order of city, state, country, and global, and if there is a policy file, download the policy file and store the policy file in the policy DB 935. The electronic device 215 may request a policy from the edge server 210 to receive the policy file corresponding to the current region. For example, when the electronic device 215 is located in the X city and the X city belongs to the A state, the electronic device 215 may receive the XCity.policy policy from the edge server 210.

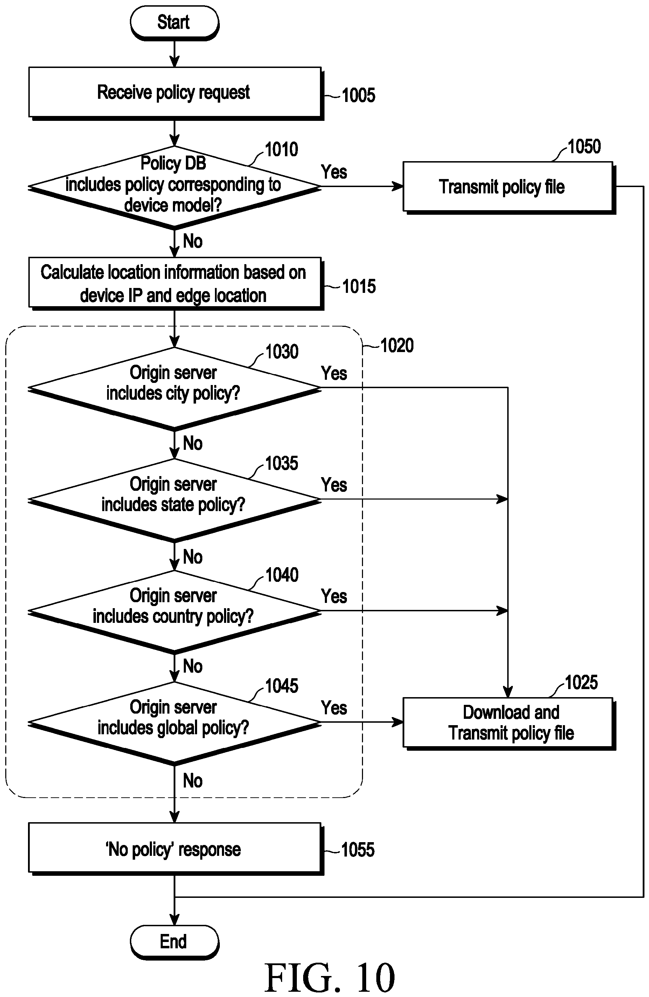

FIG. 10 is a flowchart illustrating an example firmware update support procedure by an edge server 210 according to an embodiment of the disclosure. According to various embodiments, at least one of operations to be described below may be omitted, modified, or performed in a different order. At least one of operations to be described below may be executed by the processor 310 of the edge server 210.

Referring to FIG. 10, in operation 1005, the edge server 210 (e.g., the processor 310) may receive a policy request from an electronic device (e.g., the electronic device 215). In an embodiment, the policy request may be transmitted by the electronic device 215 to request the latest version of the firmware update policy. In one embodiment, the firmware update policy includes information about at least one of a specified version of firmware to be updated, a time point (e.g., a time range) when a firmware download is allowed, or a region where a firmware download is allowed.

In operation 1010, the edge server 210 (e.g., the processor 310) may determine whether the policy file including the firmware update policy corresponding to the communication operator and/or the device model of the electronic device 215 is stored in the policy DB (e.g., the policy DB 735 or policy DB 935 in the memory 315) in response to receiving the policy request. In an embodiment, the policy file may include the firmware update policy corresponding to the device model of the electronic device 215 and/or the communication operator.

When there is a policy file corresponding to the device model of the electronic device 215 and/or the communication operator ('Yes' in operation 1010), in operation 1050, the edge server 210 (e.g., the processor 310) may transmit the policy file stored in the policy DB to the electronic device 215 and may terminate the procedure.

If there is no policy file corresponding to the device model of the electronic device 215 and/or the communication operator ('No' in operation 1010), the edge server 210 (e.g., the processor 310) may obtain (e.g., calculate) region information of the electronic device 215 (e.g., indicating at least one of a city, a state, or a country in which the electronic device 215 locates) based on the IP address of the electronic device 215 and the location of the edge server 210 in operation 1015.

In operation 1020, the edge server 210 (e.g., the processor 310) may determine whether the policy file corresponding to the region information is stored in the origin server (e.g., the origin server 705) based on the obtained (e.g., calculated) region information. In an embodiment, operation 1020 may include at least one of operation 1030, operation 1035, operation 1040, or operation 1045. In an embodiment, in operation 1020, the edge server 210 (e.g., the processor 310) may request a desired policy file from the origin server 705 based on the region information and may receive a response thereto, thereby identifying whether the desired policy file is stored in the origin server 705.

In operation 1030, the edge server 210 (e.g., the processor 310) may request a city policy file corresponding to the device model and region information (e.g., city) about the electronic device 215 from the origin server 705. When the origin server 705 stores the corresponding city policy file ('Yes' in operation 1030), in operation 1025, the edge server 210 (e.g., the processor 310) may download the city policy file (e.g., "XCity.policy") from the origin server 705 and may transmit the downloaded city policy file to the electronic device 215. When the origin server 705 does not store the city policy file corresponding to the device model and region information (e.g., city) about the electronic device 215 ('No' in operation 1030), the edge server 210 (e.g., the processor 310) may proceed to operation 1035.

In operation 1035, the edge server 210 (e.g., the processor 310) may request a state policy file corresponding to the device model and region information (e.g., state) about the electronic device 215 from the origin server 705. When the origin server 705 stores the corresponding state policy file ('Yes' in operation 1035), in operation 1025, the edge server 210 (e.g., the processor 310) may download the state policy file (e.g., "AState.policy") from the origin server 705 and may transfer the downloaded state policy file to the electronic device 215. When the origin server 705 does not store the state policy file corresponding to the device model and region information (e.g., state) about the electronic device 215 ('No' in operation 1035), the edge server 210 (e.g., the processor 310) may proceed to operation 1040.

In operation 1040, the edge server 210 (e.g., the processor 310) may request a country policy file corresponding to the device model and region information (e.g., country) about the electronic device 215 from the origin server 705. When the origin server 705 stores the corresponding country policy file ('Yes' in operation 1040), in operation 1025, the edge server 210 (e.g., the processor 310) may download the country policy file (e.g., "ZCountry.policy") from the origin server 705 and may transfer the downloaded country policy file to the electronic device 215. When the origin server 705 does not store the country policy file corresponding to the device model and region information (e.g., country) about the electronic device 215 ('No' in operation 1040), the edge server 210 (e.g., the processor 310) may proceed to operation 1045.

In operation 1045, the edge server 210 (e.g., the processor 310) may request a global policy file corresponding to the device model of the electronic device 215 from the origin server 705. When the origin server 705 stores the corresponding global policy file ('Yes' in operation 1045), in operation 1025, the edge server 210 (e.g., the processor 310) may download the global policy file (e.g., "Global.policy") from the origin server 705 and may transfer the downloaded global policy file to the electronic device 215.

In an embodiment, in operation 1025, the edge server 210 (e.g., processor 310) may transfer the downloaded policy file (e.g., the city policy file, state policy file, country policy file, or global policy file) to the electronic device 215 that has transmitted the policy request in operation 1005 or may store the policy file in the policy DB (e.g., the policy DB 735 or policy DB 935) without transferring it to the electronic device 215. The edge server 210 (e.g., the processor 310) may receive a policy request from the electronic device 215 or another electronic device and may provide the stored policy file to the electronic device 215 or the other electronic device.

When the origin server 705 does not store the global policy file corresponding to the device model of the electronic device 215 ('No' in operation 1045), the edge server 210 (e.g., the processor 310) may proceed to operation 1055. In operation 1055, the edge server 210 (e.g., the processor 310) may transmit a response message indicating that there is no policy file corresponding to the device model of the electronic device 215 to the electronic device 215 and may terminate the procedure. The electronic device 215 that has not received the new version of the policy file may perform the firmware update according to the existing firmware update policy, or may stop the firmware update until the new version of the policy file is received.

Although not illustrated, when the edge server 210 (e.g., the processor 310) fails to obtain (e.g., calculate) the region information about the electronic device 215 in operation 1015, the edge server 210 may download the global policy file from the origin server 705 and may transfer the global policy file to the electronic device 215. Although not illustrated, when a valid time (e.g., the time to live (TTL)) of the policy file stored in the policy DB (e.g., the policy DB 735 or the policy DB 935 in the memory 315) in operation 1010 expires (e.g., TTL<=0), the edge server 210 (e.g., the processor 310) may proceed to operation 1015 to download the regional policy file corresponding to the region information about the electronic device 215 from the origin server 705 or may download the global policy file from the origin server 705.

When failing to obtain (e.g., calculate) the region information about the electronic device 215, the global policy file may be downloaded from the origin server 705 and transferred to the electronic device 215.

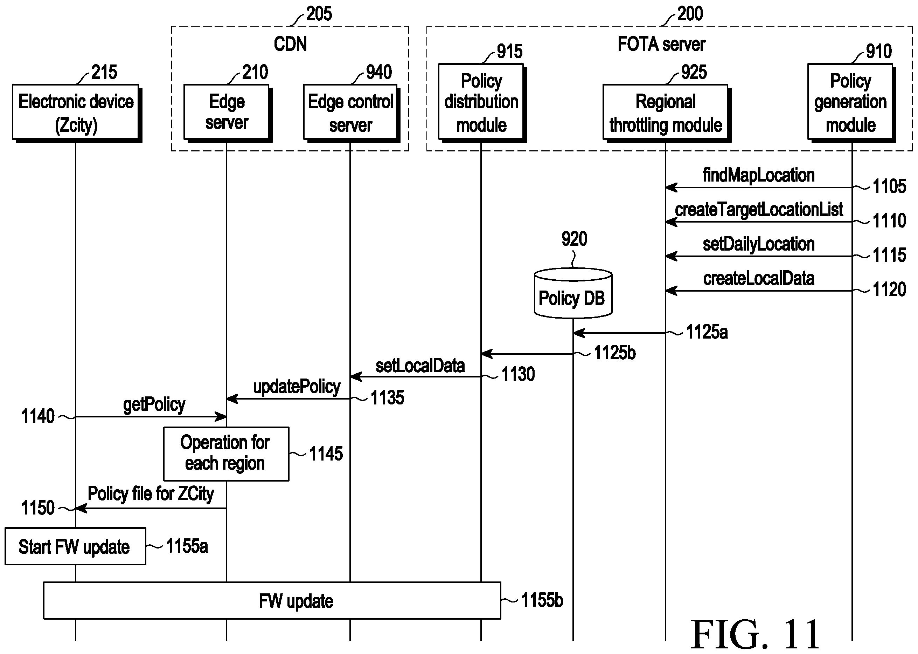

FIG. 11 is a sequence diagram illustrating an example regional gradual distribution of a firmware update policy according to an embodiment of the disclosure.

Referring to FIG. 11, in operation 1105, the FOTA server 200 (e.g., the policy generation module 910) may designate at least one of the start location, the end location, or the distribution direction (e.g., latitude/vertical or longitude/horizontal) for applying the firmware update policy through regional throttling. In an embodiment, the policy generation module 910 may transmit a message (e.g., 'findMapLocation') indicating at least one of the start location, the end location, or the distribution direction to the regional throttling module 925.

In operation 1110, the FOTA server 200 (e.g., the policy generation module 910) may generate a target region list for applying the firmware update policy through regional throttling. In an embodiment, in operation 1105, the policy generation module 910 may transmit a message (e.g., 'createTargetLocationList') requesting the regional throttling module 925 to generate a target region list having directivity in the regional unit (e.g., city, state, or country) set according to the designated information (e.g., at least one of the start location, the end location, or the distribution direction). The regional throttling module 925 may generate a target region list according to the messages in operations 1105 and 1110.

In operation 1115, the FOTA server 200 (e.g., the policy generation module 910) may designate at least one region to which a new version of the firmware update policy is to be applied on the designated date, based on the target region list, according to the designated date (e.g., the present date) when regional throttling is performed and the entire service region (e.g., one country or several countries). In an embodiment, the policy generation module 910 may transmit, to the regional throttling module 925, a message (e.g., "setDailyLocation") for setting at least one region to which the new version of the firmware update policy is to be applied according to the designated date.

In operation 1120, the FOTA server 200 (e.g., the policy generation module 910) may generate at least one policy file to be opened in at least one region designated according to regional throttling. In an embodiment, the policy generation module 910 may transmit a message (e.g., 'createLocalData') requesting the regional throttling module 925 to generate at least one policy file for opening in the at least one designated region.

In operation 1125a, the FOTA server 200 may store at least one policy file generated for regional throttling in the policy DB 920. In an embodiment, the regional throttling module 925 may generate the at least one policy file according to the messages of operation 1115 and operation 1120 and may store the at least one policy file in the policy DB 920.

In operation 1125b, the FOTA server 200 (e.g., the policy distribution module 915) may read at least one policy file stored in the policy DB 920 from the policy DB 920. In operation 1130, the FOTA server 200 (e.g., the policy distribution module 915) may transmit the read at least one policy file to the content delivery network 205 (e.g., the edge control server 940). In an embodiment, the policy distribution module 915 may transmit, to the edge control server 940, a message (e.g., "setLocalData") including a regional policy file designated to open for the region where the electronic device 215 is located, based on the region information about the electronic device (e.g., the electronic device 215) that has transmitted the policy request.

In operation 1135, the content delivery network 205 (e.g., the edge control server 940) may transmit the regional policy file to the edge server (e.g., the edge server 210) of the corresponding region. In an embodiment, the edge control server 940 may transmit a message (e.g., "updatePolicy") including the regional policy file to the edge server 210. The edge server 210 may store the received regional policy file in a policy DB (e.g., the policy DB 935). In an embodiment, the regional policy files may include information instructing firmware updates of different versions for at least two regions. In an embodiment, the regional policy files may include information instructing to perform firmware update at different time points for at least two regions.

In operation 1140, the electronic device 215 may transmit a policy request message (e.g., 'getPolicy') to the edge server 210 to perform firmware update when accessing the content delivery network 205 (e.g., the edge server 210 located close to the electronic device 215 in the content delivery network 205). In operation 1145, the edge server 210 may perform a regional edge operation for determining a regional policy file including a regional firmware update policy for the electronic device 215. In operation 1150, the edge server 210 may transmit a regional policy file corresponding to the device model of the electronic device 215 (e.g., a policy file for Z City from the regional policy file received from the edge control server 940 in operation 1135) to the electronic device 215.

In operation 1155a, the electronic device 215 may determine to start firmware update based on the regional firmware update policy included in the regional policy file. In an embodiment, the electronic device 215 may initiate firmware update at the time point when the firmware of a desired version (e.g., the most recent version) is opened according to the firmware update policy.

In operation 1155b, the electronic device 215 may perform firmware update according to the firmware update policy. In an embodiment, operation 1155b may include at least one of operation 615, operation 620, operation 625, operation 630, operation 635, or operation 640 of FIG. 6. The electronic device 215 may execute the new version of firmware by updating the firmware in operation 1155b.

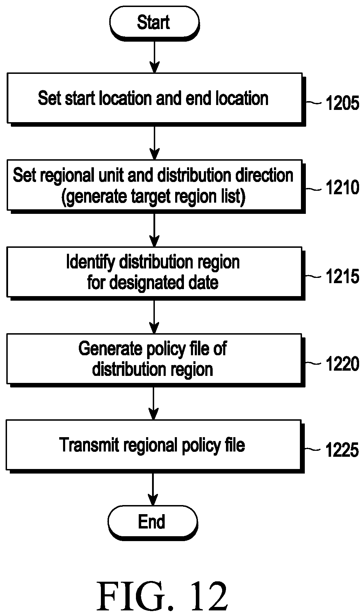

FIG. 12 is a flowchart illustrating an example firmware update support procedure by an FOTA server according to an embodiment of the disclosure. According to various embodiments, at least one of operations to be described below may be omitted, modified, or performed in a different order. At least one of operations to be described below may be executed by the processor 330 of the FOTA server 200.

Referring to FIG. 12, in operation 1205, the FOTA server 200 (e.g., the processor 330) may determine a start location and an end location for regional, gradual distribution of the firmware update policy. In an embodiment, the start location may include a FROM region indicating one region (e.g., a state) within the service region (e.g., one country or several countries), and the end location may include a TO region indicating another region (e.g., a state) within the service region. In one embodiment, based on the distribution direction, the start location may be determined as the first location within the service area and the end location may be determined as the last location. For example, if the distribution direction is horizontal, the start location may be determined as the most westerly city and the end location may be determined as the most easterly city.

In an embodiment, the policy generation module 910 of the FOTA server 200 may transmit, to the regional throttling module 925, information about the start location and the end location indicated by latitude and longitude, respectively.

In operation 1210, the FOTA server 200 (e.g., the processor 330) may generate a target region list including regions corresponding to a designated regional unit and a designated distribution direction, based on the start location and the end location. In an embodiment, the regional unit may be city, state, or country. In an embodiment, the distribution direction may be a horizontal direction or a vertical direction. The target region list may include a plurality of regions from a region corresponding to the start location to a region corresponding to the end location in the service region in order according to the distribution direction. In an embodiment, the regional throttling module 925 of the FOTA server 200 may receive information about at least one of the regional unit or the distribution direction from the policy generation module 910 and may generate the target region list.

In operation 1215, the FOTA server 200 (e.g., the processor 330) may identify at least one region in which the firmware update policy is to be distributed on the corresponding date according to the entire service region and designated dates (e.g., including the present date) on which regional throttling is performed. In an embodiment, the FOTA server 200 (e.g., the regional throttling module 925) may determine (e.g., select or sequentially select) at least one region corresponding to each of the designated dates based on the target region list. In an embodiment, the FOTA server 200 (e.g., the regional throttling module 925) may determine a plurality of regions corresponding to a plurality of dates respectively.

In operation 1220, the FOTA server 200 (e.g., the processor 330) may identify (e.g., obtain or generate) at least one regional policy file each including a firmware update policy to be applied to electronic devices (e.g., the electronic device 215) located in the determined at least one region. One regional policy file may include information indicating that firmware update is allowed for a designated region on a designated date. In an embodiment, the regional policy file may include information indicating the open date of firmware for electronic devices in the designated region. In an embodiment, the regional policy file may include information instructing firmware updates of different versions for at least two regions. In an embodiment, the regional policy file may include information instructing firmware update according to different time points or different time periods for at least two regions.

In an embodiment, the FOTA server 200 (e.g., the processor 330) may generate the regional policy file such that the new version of firmware is sequentially opened in regions based on the target region list according to a designated distribution direction (e.g., the distribution direction 810 of FIG. 8). For example, the regional policy files for CALIFORNIA, OREGON, and WASHINGTON may include information that designates the opening date of the firmware as the first or second day from the designated reference date. For example, the regional policy file for NEW JERSEY may include information that designates the open date of firmware as the 21st or 22nd day from a designated reference date.

In operation 1225, the FOTA server 200 (e.g., the processor 330) may distribute the generated at least one regional policy file to an edge server (e.g., the edge server 210) of a corresponding region through the edge control server 940 of the content delivery network 205. The regional policy file may be transferred to electronic devices (e.g., the electronic device 215) in the corresponding region by the edge server 210. The electronic devices may download a new version of firmware on the open date indicated by the firmware update policy included in the regional policy file.

According to example embodiments of the disclosure, the edge server 210 may limitedly provide firmware update of the electronic device 215 to a specific region (e.g., city, state, or country) without exposure for the location of the electronic device (e.g., the electronic device 215).

According to example embodiments of the disclosure, the manufacturer server (e.g., the FOTA server 200) may distribute regional policy files to edge servers of the content delivery network 205 without collecting locations of electronic devices (e.g., the electronic device 215), and the edge servers may download different policy files for each region to the electronic devices.

According to example embodiments of the disclosure, the FOTA server 200 may designate various time points and/or periods when electronic devices perform firmware update through regional policy files. In an embodiment, the FOTA server 200 may generate regional policy files such that the electronic devices perform firmware update at different time points for each region.

According to example embodiments of the disclosure, the FOTA server 200 may designate a start location, an end location, a unit region, or a distribution direction to determine target regions to which regional policy files are to be distributed, and may sequentially distribute regional policy files to edge servers located in regions from the start location to the end location according to the designated distribution direction. In an embodiment, the FOTA server 200 may distribute regional policy files to edge servers located in regions from the start location to the end location, for example, in the vertical direction along latitude or the horizontal direction along longitude.

According to example embodiments of the disclosure, when the device model of the electronic device (e.g., the electronic device 215) transmitting the policy request and the policy file corresponding to the current location are not stored in the policy DB (e.g., the policy DB 735 or the policy DB 935), the edge server (e.g., the edge server 210) may obtain the regional policy file corresponding to the current location and the device model of the electronic device 215 from the origin server 705.

A server 200 according to an example embodiment may include a communication circuit 325, a processor 330 operatively connected to the communication circuit, and memory 335 storing instructions. The instructions may, when executed by the processor, cause the server to identify a target region list including a plurality of regions in which a firmware update policy is to be applied for sequentially distributing firmware update on a plurality of designated dates based on a distribution direction from a designated start location to a designated end location. The instructions may, when executed by the processor, cause the server to obtain one or more regional policy files including the firmware update policy to be applied or sequentially distributing firmware update to electronic devices located in the plurality of regions included in the target region list for the designated dates. The instructions may, when executed by the processor, cause the server to transmit the one or more regional policy files to one or more edge servers corresponding to the plurality of regions, in a content delivery network (CDN) for firmware update through the communication circuit. The instructions may, when executed by the processor, cause the server to receive, through the communication circuit, a firmware download request originated from an electronic device (215), wherein the firmware download request is to be processed based on a first regional policy file corresponding to a region in which the electronic device is located. The instructions may, when executed by the processor, cause the server to cause a first edge server, which obtained the first regional policy file, based on an internet protocol (IP) address of the electronic device and a location of the first edge server, to provide a firmware package file to the electronic device in response to receiving the firmware download request.

In an example embodiment, the one or more regional policy files may include information instructing firmware updates of different versions for at least two regions.

In an example embodiment, the one or more regional policy files may include information instructing firmware update according to different time points or different time periods for at least two regions.

In an example embodiment, the target region list may include a plurality of regions in an order according to the designated distribution direction, from a start region corresponding to the start location to an end region corresponding to the end location in the service region.

In an example embodiment, at least one of the start location or the end location may indicate a region corresponding to at least one of a city, a state, or a country.

In an example embodiment, the distribution direction may indicate a horizontal direction according to a latitude from the start location to the end location. In an example embodiment, the distribution direction may indicate a vertical direction according to a longitude from the start location to the end location.

An edge server 210 of a content delivery network (CDN) according to an example embodiment may include a communication circuit 305, a memory 315, and a processor 310 operatively connected to the communication circuit and the memory. The processor may be configured to receive a policy request for firmware update from an electronic device 215 through the communication circuit. The processor may be configured to determine whether a firmware update policy corresponding to a device model of the electronic device is stored in the memory in response to the policy request. The processor may be configured to, based on the firmware update policy being not stored in the memory, obtain (e.g., calculate) region information of the electronic device based on an IP address of the electronic device and a location of the edge server. The processor may be configured to download, from a server, a regional policy file including a firmware update policy corresponding to the region information. The processor may be configured to transmit the regional policy file to the electronic device through the communication circuit.

In an example embodiment, the region information may indicate at least one of a city, a state, or a country where the electronic device belongs.

In an example embodiment, the regional policy file may include information instructing firmware updates of different versions for at least two regions.

In an example embodiment, the at least one regional policy file may include information instructing firmware update according to different time points or different time periods for at least two regions.

A method performed by a server 200 according to an example embodiment may include identifying (1205, 1210) a target region list including a plurality of regions in which a firmware update policy is to be applied for sequentially distributing firmware update on a plurality of designated dates based on a distribution direction from a designated start location to a designated end location. The method may include obtaining (1215, 1220) one or more regional policy files including the firmware update policy to be applied for sequentially distributing firmware update to electronic devices located in the plurality of regions included in the target region list for the designated dates. The method may include transmitting (1225) the one or more regional policy files to one or more edge servers corresponding to the plurality of regions, in a content delivery network (CDN) for firmware update. The method may include receiving (620) a firmware download request originated from en electronic device (215), wherein the firmware download request is to be processed based on a first regional policy file corresponding to a region in which the electronic device is located. The method may include causing (625) a first edge server, which obtained the first regional policy file, based on an internet protocol (IP) address of the electronic device and a location of the first edge server, to provide a firmware package file to the electronic device in response to receiving the firmware download request.

In an example embodiment, the one or more regional policy files may include information instructing firmware updates of different versions for at least two regions.

In an example embodiment, the one or more regional policy files may include information instructing firmware update according to different time points or different time periods for at least two regions.

In an example embodiment, the target region list may include a plurality of regions in an order according to the designated distribution direction, from a start region corresponding to the start location to an end region corresponding to the end location in the service region.

In an example embodiment, at least one of the start location or the end location may indicate a region corresponding to at least one of a city, a state, or a country.

In an example embodiment, the distribution direction may indicate a horizontal direction according to a latitude from the start location to the end location. In an example embodiment, the distribution direction may indicate a vertical direction according to a longitude from the start location to the end location.

A method for operating an edge server 210 of a content delivery network (CDN) 205 according to an example embodiment may include receiving (1005) a policy request for updating firmware from an electronic device 215. The method may include determining (1010) whether a firmware update policy corresponding to a device model of the electronic device is stored in the memory in response to the policy request. The method may include, based on the firmware update policy being not stored in the memory, obtaining (e.g., calculating) (1015) region information of the electronic device based on an IP address of the electronic device and a location of the edge server. The method may include downloading (1025), from a server, a regional policy file including a firmware update policy corresponding to the region information. The method may include transmitting (1025) the regional policy file to the electronic device.

In an example embodiment, the region information may indicate at least one of a city, a state, or a country where the electronic device belongs.

In an example embodiment, the regional policy file may include information instructing firmware updates of different versions for at least two regions.

In an example embodiment, the at least one regional policy file may include information instructing firmware update according to different time points or different time periods for at least two regions.

In a non-transitory computer-readable storage medium storing one or more programs according to an example embodiment, the one or more programs may include instructions configured to, when executed by a processor (330) of a server (200), enable the server to: identify a target region list including a plurality of regions in which a firmware update policy is to be applied for sequentially distributing firmware update on a plurality of designated dates based on a distribution direction from a designated start location to a designated end location, obtain one or more regional policy files including the firmware update policy to be applied for sequentially distributing firmware update to electronic devices located in the plurality of regions included in the target region list for the designated dates, transmit the one or more regional policy files to one or more edge servers corresponding to the plurality of regions, in a content delivery network (CDN) for firmware update, receive a firmware download request originated from en electronic device, wherein the firmware download request is to be processed based on a first regional policy file corresponding to a region in which the electronic device is located, and cause a first edge server which obtained the first regional policy file based on an internet protocol (IP) address of the electronic device and a location of the first edge server, to provide a firmware package file to the electronic device in response to receiving the firmware download request.

In a non-transitory computer-readable storage medium storing one or more programs according to an example embodiment, the one or more programs may include instructions configured to, when executed by a processor (310) of an edge server (210), enable the edge server to receive a policy request for firmware update from an electronic device; determine whether a firmware update policy corresponding to a device model of the electronic device is stored in response to the policy request and, based on the firmware update policy being not stored, obtain region information of the electronic device based on an IP address of the electronic device and a location of the edge server, download, from a server, a regional policy file including a firmware update policy corresponding to the region information, and transmit the regional policy file to the electronic device.

The electronic device according to various example embodiments of the disclosure may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and are intended to include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136, external memory 315, or memory 315) that is readable by a machine (e.g., the electronic device 101 or the edge server 210). For example, a processor (e.g., the processor 120 or processor 310) of the machine (e.g., the electronic device 101 or edge server 210) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium, where the term "non-transitory" refers to the storage medium being a tangible device, and does not include a signal (e.g., an electromagnetic wave), but this term does not differentiate between data being semi-permanently stored in the storage medium and data being temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A server (200), comprising:
a communication circuit (325);
a processor (330) operatively connected to the communication circuit; and
memory (335) storing instructions that, when executed by the processor, cause the server to:
identify a target region list including a plurality of regions in which a firmware update policy is to be applied for sequentially distributing firmware update on a plurality of designated dates based on a distribution direction from a designated start location to a designated end location;
obtain one or more regional policy files including the firmware update policy to be applied for sequentially distributing firmware update to electronic devices located in the plurality of regions included in the target region list for the designated dates;
transmit the one or more regional policy files to one or more edge servers, corresponding to the plurality of regions, in a content delivery network (CDN) for firmware update through the communication circuit;
receive, through the communication circuit, a firmware download request originated from an electronic device (215), wherein the firmware download request is to be processed based on a first regional policy file corresponding to a region in which the electronic device is located; and
cause a first edge server, which obtained the first regional policy file, based on an internet protocol (IP) address of the electronic device and a location of the first edge server, to provide a firmware package file to the electronic device in response to receive the firmware download request.

2. The server of claim 1, wherein the one or more regional policy files include information instructing different versions of firmware updates for at least two regions.

3. The server of claim 1 or 2, wherein the one or more regional policy files include information instructing firmware update according to different time points or different time periods for at least two regions.

4. The server of any one of claims 1 to 3, wherein the target region list includes a plurality of regions in an order according to the designated distribution direction, from a start region corresponding to the start location to an end region corresponding to the end location in the service region.

5. The server of any one of claims 1 to 4, wherein at least one of the start location or the end location indicates a region corresponding to at least one of a city, a state, or a country.

6. The server of any one of claims 1 to 5, wherein the distribution direction indicates a horizontal direction according to a latitude from the start location to the end location, or indicates a vertical direction according to a longitude from the start location to the end location.

7. A method performed by a server (200), the method comprising:
identifying (1205, 1210) a target region list including a plurality of regions in which a firmware update policy is to be applied for sequentially distributing firmware update on a plurality of designated dates based on a distribution direction from a designated start location to a designated end location;
obtaining (1215, 1220) one or more regional policy files including the firmware update policy to be applied for sequentially distributing firmware update to electronic devices located in the plurality of regions included in the target region list for the designated dates;
transmitting (1225) the one or more regional policy files to one or more edge servers corresponding to the plurality of regions, in a content delivery network (CDN) for firmware update;
receiving (620) a firmware download request originated from en electronic device (215), wherein the firmware download request is to be processed based on a first regional policy file corresponding to a region in which the electronic device is located; and
causing (625) a first edge server, which obtained the first regional policy file, based on an internet protocol (IP) address of the electronic device and a location of the first edge server, to provide a firmware package file to the electronic device in response to receiving the firmware download request.

8. The method of claim 7, wherein the one or more regional policy files include information instructing different versions of firmware updates for at least two regions, and/or
information instructing firmware update according to different time points or different time periods for at least two regions.

9. The method of claim 7 or 8, wherein the target region list includes a plurality of regions in an order according to the designated distribution direction, from a start region corresponding to the start location to an end region corresponding to the end location in the service region.

10. The method of any one of claims 7 to 9, wherein at least one of the start location or the end location indicates a region corresponding to at least one of a city, a state, or a country.

11. The method of any one of claims 7 to 10, wherein the distribution direction indicates a horizontal direction according to a latitude from the start location to the end location, or indicates a vertical direction according to a longitude from the start location to the end location.

12. Anon-transitory computer-readable storage medium storing one or more programs, the one or more programs comprising instructions configured to, when executed by a processor (330) of a server (200), cause the server to:
identify a target region list including a plurality of regions in which a firmware update policy is to be applied for sequentially distributing firmware update on a plurality of designated dates based on a distribution direction from a designated start location to a designated end location;
obtain one or more regional policy files including a firmware update policy to be applied for sequentially distributing firmware update to electronic devices located in the plurality of regions included in the target region list for the designated dates;
transmit the one or more regional policy files to one or more edge servers corresponding to the plurality of regions, in a content delivery network (CDN) for firmware update;
receive a firmware download request originated from en electronic device (215), wherein the firmware download request is to be processed based on a first regional policy file corresponding to a region in which the electronic device is located; and
cause a first edge server, which obtained the first regional policy file, based on an internet protocol (IP) address of the electronic device and a location of the first edge server, to provide a firmware package file to the electronic device in response to receiving the firmware download request.

13. The storage medium of claim 12, wherein the one or more regional policy files include information instructing different versions of firmware updates for at least two regions, and/or information instructing firmware update according to different time points or different time periods for at least two regions.

14. The storage medium of claim 12 or 13, wherein the target region list includes a plurality of regions in an order according to the designated distribution direction, from a start region corresponding to the start location to an end region corresponding to the end location in the service region.

15. The storage medium of any one of claims 12 to 14, wherein at least one of the start location or the end location indicates a region corresponding to at least one of a city, a state, or a country.
